# EUROPÄISCHE PATENTANMELDUNG

(11) **EP 4 124 547 A1**
(43) Veröffentlichungstag der Anmeldung: **01.02.2023**
(21) Anmeldenummer: 21187660.2
(22) Anmeldetag: 26.07.2021
(51) Int. Cl.: B62D 35/00, B60R 19/56

(54) **NUTZFAHRZEUG MIT SEITLICHER ANFAHRSCHUTZVORRICHTUNG**

(71) Anmelder: Schmitz Cargobull AG, 48341 Altenberge (DE)
(72) Erfinder: Beelmann, Reinhard, 45721 Haltern am See (DE)
(74) Vertreter: Cohausz & Florack

(57) **Zusammenfassung**

Beschrieben und dargestellt ist ein Nutzfahrzeug, insbesondere Lastkraftwagen, Anhänger oder Sattelauflieger, mit einem wenigstens ein Räderpaar aufweisenden Fahrgestell und einer von dem Fahrgestell getragenen Bodenstruktur, wobei an wenigstens einer Längsseite des Nutzfahrzeugs in Fahrtrichtung des Nutzfahrzeugs vor und/oder hinter dem wenigstens einen Räderpaar wenigstens eine Anfahrschutzvorrichtung unterhalb der Bodenstruktur vorgesehen ist und wobei die Anfahrschutzvorrichtung wenigstens ein sich parallel zur Fahrzeuglängsrichtung erstreckendes Plankenelement zum Verhindern eines seitlichen Unterfahrens des Nutzfahrzeugs bereitstellt. Damit die aerodynamischen Eigenschaften des Nutzfahrzeugs verbessert werden können, ist vorgesehen, dass ein sich parallel zur Fahrzeuglängsrichtung erstreckendes, wenigstens eine flexible Materialbahn umfassendes Aerodynamikelement vorgesehen ist und dass die flexible Materialbahn sich wenigstens zwischen der Bodenstruktur und dem wenigstens einen Plankenelement und/oder wenigstens zwischen zwei übereinander angeordneter Plankenelemente erstreckt.

## Beschreibung

Die Erfindung betrifft ein Nutzfahrzeug, insbesondere Lastkraftwagen, Anhänger oder Sattelauflieger, mit einem wenigstens ein Räderpaar aufweisenden Fahrgestell und einer von dem Fahrgestell getragenen Bodenstruktur, wobei an wenigstens einer Längsseite des Nutzfahrzeugs in Fahrtrichtung des Nutzfahrzeugs vor und/oder hinter dem wenigstens einen Räderpaar wenigstens eine Anfahrschutzvorrichtung unterhalb der Bodenstruktur vorgesehen ist und wobei die Anfahrschutzvorrichtung wenigstens ein sich parallel zur Fahrzeuglängsrichtung erstreckendes Plankenelement zum Verhindern eines seitlichen Unterfahrens des Nutzfahrzeugs bereitstellt.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Fahrwerk mit einem oder mehreren Räderpaaren auf. Man spricht in diesem Zusammenhang auch von einachsigen, zweiachsigen oder dreiachsigen Nutzfahrzeugen, auch wenn die Räder der entsprechenden Räderpaare nicht körperlich durch eine Achse verbunden sein müssen, sondern auch über eine Einzelradaufhängung verfügen können. Ja nach Art des Nutzfahrzeugs können die Räderpaare dem vorderen oder dem hinteren Ende des Nutzfahrzeugs zugeordnet sein. Dies ist meist bei mehrachsigen Anhängern der Fall. Bei Sattelaufliegern sind die Räderpaare jedoch mit einem nicht unerheblichen Abstand zum vorderen sowie zum hinteren Ende des Nutzfahrzeugs vorgesehen. Von dem Fahrwerk wird eine Bodenstruktur getragen, die bedarfsweise Teil eines mit dem Fahrwerk verbundenen Chassis sein kann. Die Bodenstruktur stellt bedarfsweise einen Ladeboden bereit auf den zu transportierende Ladung aufgestellt werden kann. Im Falle von sogenannten Kipperfahrzeugen, kann die Bodenstruktur eine Mulde tragen, in der Schüttgut transportiert werden kann.

Unabhängig von der Art der Nutzfahrzeuge weisen diese aus genehmigungsrechtlichen Gründen seitliche Anfahrschutzvorrichtungen auf. Diese sollen verhindern, dass Fußgänger oder Radfahrer unter das Nutzfahrzeug gelangen und dort gegebenenfalls von den Rädern des Nutzfahrzeugs erfasst werden können, wobei es in der Vergangenheit wiederholt zu schweren Personenschäden gekommen ist. Die entsprechenden Anfahrschutzvorrichtungen sind an den beiden Längsseiten der Nutzfahrzeuge unter der Bodenstruktur vorgesehen, und zwar vor oder hinter wenigstens einem Räderpaar. Dabei ist wenigstens ein Plankenelement vorgesehen, dass eine Aufprallfläche für Fahrzeuge oder Verkehrsteilnehmer bereitstellt, die sich in den meisten Fällen wenigstens im Wesentlichen über die gesamte Längserstreckung der zugehörigen Anfahrschutzvorrichtung parallel zur Längserstreckung des Nutzfahrzeugs erstreckt.

Die Nutzfahrzeuge können Planenaufbauten aufweisen, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern. Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Türen die Türen aufgenommen sind. Gegenüber von dem Rückwandrahmen ist eine Stirnwand vorgesehen. Dabei können entsprechende Stirnwände und Rückwände in gleicher Weise bei Planenaufbauten und bei Kofferaufbauten vorgesehen sein.

Bei Kofferaufbauten können die Seitenwände, das Dach, die Stirnwand, der Boden und/oder die Türen in Form von mehrschichtigen Nutzfahrzeugpaneelen aufgebaut sein, die strukturgebende Innendecklagen, strukturgebende Außendecklagen und dazwischen eine Kernlage aus geschäumtem Kunststoff umfassen. Die entsprechenden Außendecklagen und Innendecklagen können bedarfsweise selbst jeweils mehrlagig ausgebildet sein und dienen der Aussteifung der Nutzfahrzeugpaneele, weshalb die Außendecklagen und Innendecklagen meist wenigstens eine Schicht aus einem Metall und/oder einem faserverstärkten Kunststoff aufweisen. Die einzelnen Nutzfahrzeugpaneele eines Kofferaufbaus werden typischerweise jeweils über Eck miteinander verbunden, um einen quaderförmigen Kofferaufbau zu bilden, der darin einen Laderaum zur Aufnahme der zu transportierenden Güter bereithält.

Da die Kernlage der Nutzfahrzeugpaneele aus einem geschäumten Kunststoff eine hohe thermische Isolation bereitstellen kann, sind entsprechende Kofferaufbauten insbesondere auch für den Transport von temperaturempfindlichen Gütern, also beispielsweise für den sogenannten Kühltransport, geeignet. Dieselben Kofferaufbauten können auch für den Transport von feuchtigkeitsempfindlichen Gütern, also den sogenannten Trockentransport, verwendet werden.

Bei den genannten Nutzfahrzeugen wird ein geringer Luftwiderstand zur Einsparung von Kraftstoff angestrebt. Dies ist insbesondere bei Nutzfahrzeugen mit Planenaufbauten und Kofferaufbauten der Fall, da diese meist sehr große Distanzen zurücklegen. Zum Zwecke der aerodynamischen Verbesserung solcher Nutzfahrzeuge sind unterschiedliche Lösungen vorgeschlagen worden. Beispielsweise wurde vorgeschlagen, die Seiten der Nutzfahrzeuge unterhalb der Bodenstruktur mit aerodynamisch optimierten Seitenwänden aus faserverstärkten Kunststoffen zu verkleiden. Diese Verkleidungen müssen dabei die genehmigungsrechtlichen Auflagen an Anfahrschutzvorrichtungen erfüllen. Die bisherigen Entwicklungen haben jedoch noch nicht zu zufriedenstellenden Ergebnissen geführt.

Daher liegt der vorliegenden Erfindung die Aufgabe zugrunde, ein Nutzfahrzeug der eingangs genannten und zuvor näher erläuterten Art derart auszugestalten und weiterzubilden, dass die aerodynamischen Eigenschaften des Nutzfahrzeugs verbessert werden können.

Diese Aufgabe ist bei einem Nutzfahrzeug nach dem Oberbegriff von Anspruch 1 dadurch gelöst, dass ein sich parallel zur Fahrzeuglängsrichtung erstreckendes, wenigstens eine flexible Materialbahn umfassendes Aerodynamikelement vorgesehen ist und dass die flexible Materialbahn sich wenigstens zwischen der Bodenstruktur und dem wenigstens einen Plankenelement und/oder wenigstens zwischen zwei übereinander angeordneten Plankenelementen erstreckt.

Die Erfindung hat erkannt, dass es zweckmäßig ist, eine aerodynamisch unzweckmäßige, aber für die Bereitstellung eines Anfahr- oder Unterfahrschutzes geeignete Anfahrschutzvorrichtung mit einem zusätzlichen Aerodynamikelement zu kombinieren, das sich in Längsrichtung des Nutzfahrzeugs erstreckt, anstatt die Anfahrschutzvorrichtung durch eine aerodynamisch günstigere Anfahrschutzvorrichtung auszutauschen. Dies ist umso mehr der Fall, wenn das Aerodynamikelement eine flexible Materialbahn umfasst. Diese kann einfach angebracht und kostengünstig bereitgestellt werden. Zudem kann eine mögliche Reparatur problemlos erfolgen. Um eine aerodynamische Verbesserung des Nutzfahrzeugs zu erreichen, kann sich die flexible Materialbahn zwischen der Bodenstruktur und dem wenigstens einen Plankenelement erstrecken. Dieser Bereich des Nutzfahrzeugs wird also von der flexiblen Materialbahn wenigstens teilweise verschlossen, so dass es dort zu weniger Verwirbelungen des Fahrtwinds kommt. Dabei ist es aus aerodynamischen Gründen besonders bevorzugt, wenn das Aerodynamikelement und/oder die Anfahrschutzvorrichtung an einem Außenrahmen der der Bodenstruktur befestigt sind.

Alternativ oder zusätzlich kann sich die flexible Materialbahn zwischen zwei übereinander angeordneten Plankenelementen erstrecken, sofern die Anfahrschutzvorrichtung zwei oder mehr solcher Plankenelemente umfasst. Auch zwischen den Plankenelementen wird es infolge der dort vorgesehenen flexiblen Materialbahn zu weniger Verwirbelungen des Fahrtwinds kommen, wenn der entsprechende Spalt wenigstens teilweise durch die flexible Materialbahn des Aerodynamikelements verschlossen wird.

Meist wird zur Einsparung von Gewicht und Material der gegen ein Anfahren bzw. ein Unterfahren zu sichernder Bereich des Nutzfahrzeugs unterhalb der Bodenstruktur seitlich nicht vollständig durch die Anfahrschutzvorrichtung verschlossen. Es wird vielmehr mit einem gewissen vertikalen Abstand zu der Bodenstruktur ein Plankenelement vorgesehen, das sich in Längsrichtung des Nutzfahrzeugs erstreckt und mit einem Fußgänger in Kontakt kommt, bevor dieser an der entsprechenden Stelle seitlich unter das Nutzfahrzeug gelangen kann. Unterhalb dieses Plankenelements wird dann regelmäßig mit einem vertikalen Abstand zu diesem Plankenelement noch ein weiteres Plankenelement vorgesehen sein, das dieselbe Funktion erfüllt. Die beiden Plankenelemente sind dann zudem der Einfachheit halber parallel zueinander ausgerichtet. In gleicher Weise kann bedarfsweise nach unten hin noch wenigstens ein weiteres Plankenelement vorgesehen sein. Meist werden aus Kostengründen zwei Plankenelemente übereinander vorgesehen.

Es ist also nicht erforderlich eine Vollverkleidung von Bereichen des Nutzfahrzeugs unterhalb der Bodenstruktur in Form einer Anfahrschutzvorrichtung vorzusehen, an denen die Gefahr besteht, dass das Nutzfahrzeug von anderen Fahrzeugen unterfahren wird, um für günstige aerodynamische Eigenschaften des Nutzfahrzeugs zu sorgen. Es kann vielmehr ausreichen, gewöhnliche als Anfahrschutzvorrichtung geeignete Einrichtungen um ein einfaches und kostengünstiges Aerodynamikelement zu ergänzen, um wenigstens in etwa dieselben Aerodynamikeigenschnaften zu erreichen. Dies ermöglicht auch die einfache Nachrüstung von bereits in Betrieb genommenen Nutzfahrzeugen. Alternativ oder zusätzlich zu einer einfachen Nachrüstbarkeit kann auf die beschriebene Weise auch eine einfache Austauschbarkeit des Aerodynamikelements erreicht werden, wenn das Aerodynamikelement beschädigt worden ist. Es kann also letztlich die Anfahrschutzvorrichtung ganz im Sinne eines Unterfahrschutzes ausgebildet werden.

Für eine zweckmäßige Aerodynamik sorgt dann separat das Aerodynamikelement, das seinerseits keinen nennenswerten Beitrag zum Unterfahrschutz leistet.

Bei einer ersten besonders bevorzugten Ausgestaltung des Nutzfahrzeugs erstreckt sich die flexible Materialbahn des Aerodynamikelements oder das Aerodynamikelement selbst in Längsrichtung des Nutzfahrzeugs, um den aerodynamischen Anforderungen gerecht zu werden. Dabei ist die flexible Materialbahn zwischen der Bodenstruktur und einem Plankenelement und/oder zwischen zwei übereinander angeordneten Plankenelementen angeordnet, um die dortige Öffnung zu verschließen. Besonders gute aerodynamische Eigenschaften werden grundsätzlich erreicht, wenn sich die flexible Materialbahn des Aerodynamikelements oder das Aerodynamikelement selbst wenigstens im Wesentlichen über die gesamte Längserstreckung des zugeordneten Plankenelements oder der zugeordneten Plankenelemente in Längsrichtung des Nutzfahrzeugs erstreckt. Der Einfachheit halber kann es zudem bevorzugt sein, wenn sich die flexible Materialbahn des Aerodynamikelements oder das Aerodynamikelement selbst wenigstens im Wesentlichen entlang der gesamten Längserstreckung der Anfahrschutzvorrichtung als solcher erstreckt.

Um ein Unterfahren des Nutzfahrzeugs im Bereich der Anfahrschutzvorrichtung zu vermeiden und bedarfsweise zugleich den Luftwiderstand des Nutzfahrzeugs zu reduzieren, bietet es sich an, wenn je nach Ausgestaltung des Nutzfahrzeugs das Aerodynamikelement, das wenigstens eine Plankenelement, das Aerodynamikelement und/oder die flexible Materialbahn einen seitlichen Abschluss des Nutzfahrzeugs bildet. Unter einem seitlichen Abschluss wird hierbei verstanden, dass das entsprechende Bauteil in einer Richtung senkrecht zur Fahrzeuglängsrichtung und parallel zur Bodenstruktur einen äußeren seitlichen Abschluss des Nutzfahrzeugs bildet.

Zur Aussteifung des wenigstens einen Plankenelements und zur Ableitung der beim Unterfahren von dem wenigstens einen Plankenelement aufzunehmenden Kräfte bietet es sich an, wenn die wenigstens eine Anfahrschutzvorrichtung wenigstens ein an der Bodenstruktur montiertes Stützelement zum Abstützen des wenigstens einen Plankenelements aufweist. Von dem Plankenelement können dann entsprechende Anfahrkräfte über das wenigstens eine Stützelement an die Bodenstruktur und damit bedarfsweise an das Chassis des Nutzfahrzeugs abgeleitet werden.

Für eine einfache Montage und für eine verbesserte Aerodynamik des Nutzfahrzeugs kann es sich anbieten, wenn der obere Rand des Aerodynamikelements oder der obere Rand der flexiblen Materialbahn an der Bodenstruktur festgelegt ist. In einer besonders einfachen Ausgestaltung des Aerodynamikelements entspricht der obere Rand der flexiblen Materialbahn wenigstens im Wesentlichen dem oberen Rand des Aerodynamikelements. Alternativ oder zusätzlich kann aus denselben Gründen der untere Rand des Aerodynamikelements oder der flexiblen Materialbahn an dem unteren Rand oder der nach innen weisenden Rückseite des entsprechenden Plankenelements festgelegt sein. Auch hier entspricht bei einer besonders einfachen Ausgestaltung der untere Rand der flexiblen Materialbahn wenigstens im Wesentlichen dem unteren Rand des Aerodynamikelements. Bei dem entsprechenden Plankenelement handelt es sich im Falle von mehreren Plankenelementen einer Anfahrschutzvorrichtung bevorzugt um das untere Plankenelement. Auf diese Weise wird die Aerodynamik des Nutzfahrzeugs besonders zweckmäßig beeinflusst. Die Aerodynamik des Nutzfahrzeugs wird auch dadurch günstig beeinflusst, dass das Aerodynamikelement oder die flexible Materialbahn an der Außenseite des wenigstens einen Plankenelements herumgeführt ist.

Da es in vielen Fällen der Einfachheit halber bevorzugt sein wird, wenn das Aerodynamikelement im Wesentlichen aus der flexiblen Materialbahn gebildet wird, kann sowohl das Aerodynamikelement als auch die flexible Materialbahn an der Außenseite des wenigstens einen Plankenelements herumgeführt sein. Unabhängig davon bietet es sich weiter an, wenn das Aerodynamikelement oder die flexible Materialbahn im Falle von mehreren Plankenelementen an der Außenseite aller Plankenelemente herumgeführt ist.

Wenn mehrere Plankenelemente übereinander vorgesehen sind, kann zur weiteren Sicherung des Aerodynamikelements das Aerodynamikelement selbst oder auch ganz konkret die flexible Materialbahn an einem unteren Rand oder einer nach innen weisenden Rückseite eines Plankenelements festgelegt sein, das oberhalb des unteren Plankenelements vorgesehenen ist. Alternativ oder zusätzlich kann das Aerodynamikelement oder ganz konkret die flexible Materialbahn an der Außenseite des wenigstens einen weiteren Plankenelements herumgeführt sein. Dabei ist dieses wenigstens eine weitere Plankenelement eines, das oberhalb des unteren Plankenelements der Anfahrschutzvorrichtung vorgesehen ist.

Um das Aerodynamikelement einfach und zuverlässig montieren zu können, kann es sich anbieten, wenn der obere Rand und/oder der untere Rand des Aerodynamikelements einen Keder aufweist. Der Keder kann dann einfach in einer Kederleiste der Bodenstruktur oder des wenigstens einen Plankenelements aufgenommen werden. Hierzu wird der Keder bedarfsweise formschlüssig in die Kederleiste eingezogen. Um einen strammen Sitz des Aerodynamikelements oder bedarfsweise konkret der flexiblen Materialbahn zu erreichen, kann der entsprechende Keder über wenigstens ein elastisches Federelement an der flexiblen Materialbahn angebunden sein. Auf diese Weise kann letztlich ein Flattern des Aerodynamikelements im Fahrtwind vermieden werden. In einer besonders einfachen Ausgestaltung des Aerodynamikelements kann die flexible Materialbahn wenigstens abschnittsweise, insbesondere angrenzend zum Keder elastisch ausgebildet sein. So kann beispielsweise im Bereich des entsprechenden Keders ein Saum aus einem elastischen Material zur Aufnahme eines stabförmigen Kederelements vorgesehen sein.

Alternativ oder zusätzlich zu wenigstens einem Keder kann der obere Rand und/oder der untere Rand des Aerodynamikelements wenigstens ein mit dem wenigstens einen Plankenelement verbundenes Hakenelement aufweisen. Zusätzlich oder alternativ zu einem solchen Hakenelement kann auch ein Ösenelement vorgesehen sein. Beide Optionen ermöglichen grundsätzlich ein einfaches und zuverlässiges Montieren des Aerodynamikelements. Das wenigstens eine Hakenelement und/oder Ösenelement kann dabei der Einfachheit halber ebenfalls über wenigstens ein elastisches Federelement an der flexiblen Materialbahn angebunden sein, um so das Aerodynamikelement oder ganz konkret die flexible Materialbahn stramm zu ziehen. Dies ist in einer einfachen Art und Weise möglich, wenn die flexible Materialbahn wenigstens abschnittsweise, insbesondere angrenzend zum wenigstens einen Hakenelement und/oder Ösenelement elastisch ausgebildet ist. Beispielsweise kann das wenigstens eine Hakenelement und/oder Ösenelement an einem elastischen Saum der flexiblen Materialbahn vorgesehen sein.

Es ist jedoch ebenfalls möglich, dass das Aerodynamikelement oder konkret die flexible Materialbahn über wenigstens einen in einer Kederleiste aufgenommenen Keder, über wenigstens ein Hakenelement und/oder über wenigstens ein Ösenelement mit einem oberhalb des unteren Plankenelements vorgesehenen Plankenelements verbunden ist. Dann wird ein Flattern des Aerodynamikelement im Fahrtwind weiter vermindert. Dabei kann der Einfachheit halber auch hier die Kederleiste, das Hakenelement und/oder das Ösenelement über wenigstens ein elastisches Federelement an der flexiblen Materialbahn angebunden sein. Dabei kann die Anbindung über ein Federelement in dergleichen Weise bewerkstelligt werden, wie dies zuvor bereits beschrieben worden ist.

Ganz grundsätzlich bietet es sich an, wenn das Aerodynamikelement lösbar an der Anfahrschutzvorrichtung moniert ist. Dies vereinfacht das Montieren, das Nachrüsten und/das Ersetzen des Aerodynamikelements. Zudem bleibt die Funktion des Unterfahrschutzes der Anfahrschutzvorrichtung auch bei Wegnahme des Aerodynamikelements wenigstens im Wesentlichen uneingeschränkt erhalten.

Eine einfache und dennoch funktionale Ausgestaltung des Nutzfahrzeugs kann erhalten werden, wenn sich das wenigstens eine Plankenelement wenigstens im Wesentlichen parallel zur Bodenstruktur erstreckt. Im Falle von Anfahrschutzvorrichtungen mit mehreren Plankenelementen gilt dies insbesondere für alle Plankenelemente. Damit von der Anfahrschutzvorrichtung hohe Anfahrkräfte an die Bodenstruktur und damit bedarfsweise an das Chassis des Nutzfahrzeugs abgeleitet werden können, kann unabhängig davon das wenigstens eine Plankenelement durch wenigstens eine Stützelement in Form einer sich von der Bodenstruktur nach unten erstreckenden Strebe abgestützt sein. Der Einfachheit halber kann sich die wenigstens eine Strebe wenigstens im Wesentlichen senkreckt nach unten erstrecken.

Um die Anfahrschutzvorrichtung hinreichend stabil ausgestalten zu können, bietet es sich an, wenn das wenigstens eine Plankenelement und/oder das wenigstens eine Stützelement als Hohlprofil ausgebildet ist. Um weiter Material und Gewicht einzusparen kann es sich aber auch anbieten, wenn das wenigstens eine Plankenelement und/oder das wenigstens eine Stützelement durch ein nach innen offenes, insbesondere U-förmiges oder C-förmiges, Profil ausgebildet ist. Unabhängig davon ist es für die mechanischen Eigenschaften der Anfahrschutzvorrichtung zweckmäßig, wenn das wenigstens eine Plankenelement und/oder das wenigstens eine Stützelement aus Stahl, Aluminium oder einem faserverstärkten Kunststoff gebildet ist. Unter Umständen kann es auch zweckmäßig sein, einen Kunststoff in Form von Acrylnitril-Butadien-Styrol (ABS) zu verwenden.

Damit der normalerweise von der Anfahrschutzvorrichtung verdeckte Bereich unterhalb der Bodenstruktur von außen trotzdem bedarfsweise zugänglich ist, etwa um Zugang zu dort angeordneten Ausstattungseinrichtungen, wie etwa Lattenhaltern, Ersatzradhaltern oder dergleichen, zu gewähren, ist es zweckdienlich, wenn die Anfahrschutzvorrichtung zusammen mit dem Aerodynamikelement von einer einen Unterfahrschutz bereitstellenden Gebrauchsstellung in eine den Zugang zu einem Bereich unterhalb der Bodenstruktur freigebende Freigabestellung nach außen und nach oben schwenkbar, insbesondere klappbar, ausgebildet ist. Dies lässt sich konstruktiv auf einfache Weise realisieren, indem das wenigstens eine Stützelement über eine teilweise lösbare, insbesondere schwenkbare und/oder klappbare, Verbindung mit der Bodenstruktur verbunden ist.

Das Aerodynamikelement kann leicht und zugleich langlebig ausgebildet werden, wenn die wenigstens eine flexible Materialbahn durch ein Gewebe, eine Kunststofffolie, ein kunststoffbeschichtetes Gewebe, ein kunststoffbeschichtetes Gelege oder eine ein Gewebe oder eine Gelege aufweisende Kunststofffolie gebildet wird. Die Wahl des Kunststoffs und der Fasern kann dabei so erfolgen, dass die gewünschten Eigenschaften der flexiblen Materialbahn erhalten werden und dass vorzugsweise, die wenigstens eine flexible Materialbahn durch ein Planenmaterial zum Verschließen eines Planenaufbaus eines Nutzfahrzeugs ausgebildet ist. Für den Fall, dass das Nutzfahrzeug einen Planenaufbau trägt, kann es sich anbieten, wenn das Planenmaterial des Planenaufbaus wenigstens im Wesentlichen dem Planenmaterial des Aerodynamikelements entspricht.

Besonders umfangreich können die mit der zuvor beschriebenen Erfindung verbundenen Vorteile genutzt werden, wenn an beiden Längsseiten des Nutzfahrzeugs in Fahrtrichtung des Nutzfahrzeugs vor und/oder hinter dem wenigstens einen Räderpaar jeweils wenigstens eine Anfahrschutzvorrichtung unterhalb der Bodenstruktur vorgesehen ist. Jeder der Anfahrschutzvorrichtungen kann dann wenigstens ein sich parallel zur Fahrzeuglängsrichtung erstreckendes Plankenelement zum Verhindern eines seitlichen Unterfahrens des Nutzfahrzeugs bereitstellen, wobei an den Anfahrschutzvorrichtungen jeweils wenigstens ein sich parallel zur Fahrzeuglängsrichtung erstreckendes, wenigstens eine flexible Materialbahn umfassendes Aerodynamikelement vorgesehen ist. Die entsprechenden flexiblen Materialbahnen sind dabei entweder zwischen der Bodenstruktur und dem wenigstens einen Plankenelement der entsprechenden Anfahrschutzvorrichtung und/oder zwischen zwei übereinander angeordneter Plankenelemente der entsprechenden Anfahrschutzvorrichtung vorgesehen.

Die erfindungsgemäßen Vorteile kommen auch in besonderem Maße zum Tragen, wenn die Bodenstruktur des Nutzfahrzeugs einen Ladeboden bereitstellt. Dabei kann es sich insbesondere um einen Ladeboden eines Kofferaufbaus oder eines Plananaufbaus handeln. Derartige Nutzfahrzeuge legen weite Strecken zurück, so dass eine aerodynamische Verbesserung besonders zweckmäßig ist. Alternativ kann die Bodenstruktur aber auch eine Kippermulde tragen. Bei entsprechenden Kipperfahrzeugen spielt die Aerodynamik zwar meist eine geringe Rolle. Der Luftwiderstand von Kipperfahrzeugen kann aber ebenso auf die zuvor beschriebene Art gesenkt werden.

Nachfolgend wird die Erfindung anhand einer lediglich Ausführungsbeispiele darstellenden Zeichnung näher erläutert. In der Zeichnung zeigt
- Fig. 1: ein erstes erfindungsgemäßes Nutzfahrzeug mit Anfahrschutzvorrichtungen an gegenüberliegenden Längsseiten,
- Fig. 2: ein Detail der Bodenstruktur mit einer Anfahrschutzvorrichtung des Nutzfahrzeugs aus Fig. 1 in einer perspektivischen Ansicht,
- Fig. 3A-C: das Detail aus Fig. 1 mit einem Aerodynamikelement in perspektivischen Ansichten von außen und von innen sowie in einer Schnittansicht,
- Fig. 4: ein Detail der Bodenstruktur mit einer Anfahrschutzvorrichtung und einem alternativen Aerodynamikelement in einer Schnittansicht.

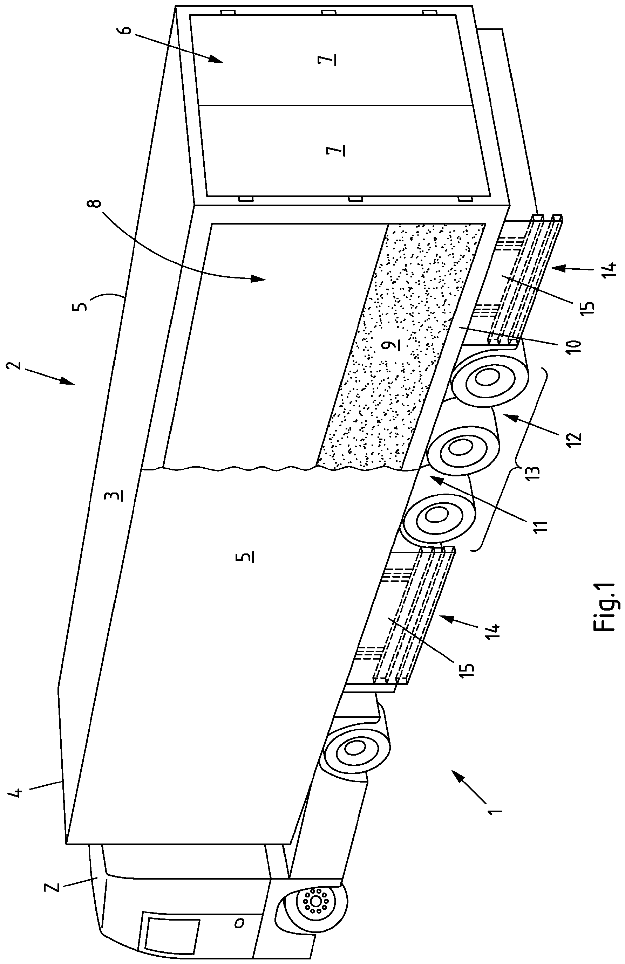

In der Fig. 1 ist ein Nutzfahrzeug 1 mit einem Aufbau 2 in Form eines Kofferaufbaus in einer perspektivischen Ansicht dargestellt, das von einer Zugmaschine Z gezogen wird. Der Aufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 einer Bodenstruktur 10 begrenzt wird, wobei der Ladeboden 9 dem Aufstellen von Ladung dient. Der Aufbau 2 könnte aber alternativ auch als Planenaufbau oder Kipperaufbau ausgebildet sein.

Die Bodenstruktur 10 des dargestellten und insoweit bevorzugten Nutzfahrzeugs 1 wird durch ein nicht im Einzelnen dargestelltes Chassis 11 gebildet. Die Bodenstruktur 10 könnte aber auch zusätzlich zu einem Chassis 11 vorgesehen sein. Die Bodenstruktur 10 wird durch ein Fahrwerk 12 getragen, das bei dem dargestellten und insoweit bevorzugten Nutzfahrzeug 1 drei Räderpaare 13 aufweist. Vor und hinter den drei Räderpaaren 13 sind unter der Bodenstruktur 10 und an jeder der Längsseiten des Nutzfahrzeugs 1 sogenannte Anfahrschutzvorrichtungen 14 vorgesehen, die vermeiden sollen, dass das Nutzfahrzeug 1 von einem anderen, insbesondere niedrigeren Fahrzeug, wie einem Personenkraftwagen oder einem Motorrad unterfahren wird. Auch soll so verhindert werden, dass Fußgänger oder Radfahrer versehentlich unter die Bodenstruktur 10 des Nutzfahrzeugs 1 geraten. Entsprechende Anfahrschutzvorrichtungen 14 sind typischerweise genehmigungsrechtlich vorgeschrieben und somit nicht verzichtbar. Die Anfahrschutzvorrichtungen 14 sind jeweils mit einem Aerodynamikelement 15 versehen, das die Aerodynamik der entsprechenden Anfahrschutzvorrichtung 14 und damit des Nutzfahrzeugs 1 verbessert.

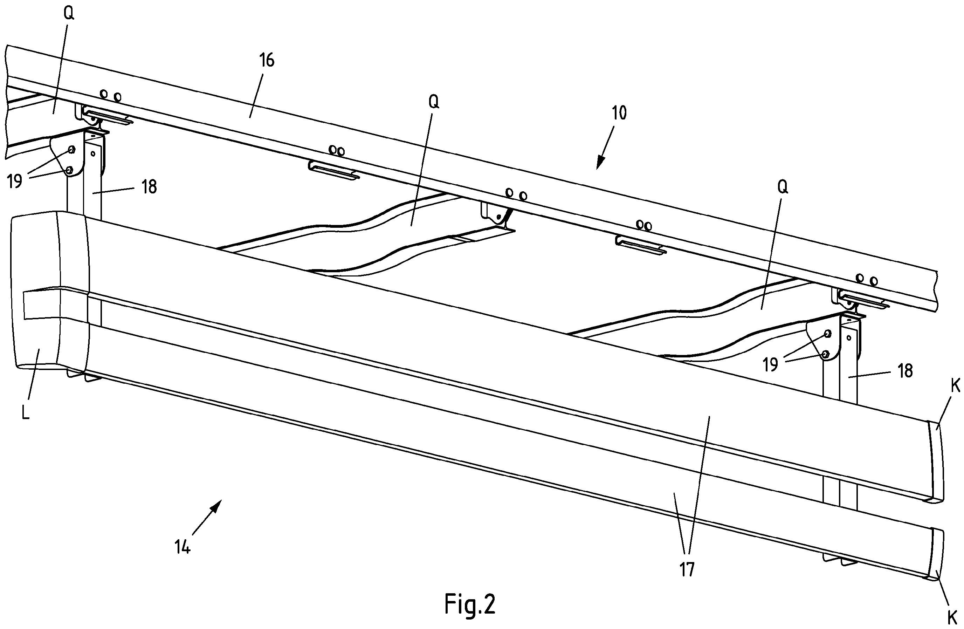

In der Fig. 2 ist die an einem Außenrahmen 16 der Bodenstruktur 10 angebundene Anfahrschutzvorrichtung 14 des Nutzfahrzeugs 1 aber ohne das zugehörige Aerodynamikelement 15 in einer Detaildarstellung exemplarisch dargestellt. Jeder der Anfahrschutzvorrichtungen 14 weist zwei wenigstens im Wesentlichen parallel zu einander, wenigstens im Wesentlichen parallel zur Längsseite des Nutzfahrzeugs 1 und wenigstens im Wesentlichen parallel zur Bodenstruktur 10, insbesondere zu deren Außenrahmen 16, verlaufende Plankenelemente 17 auf. Die Plankenelemente 17 sind bei dem dargestellten und insoweit bevorzugten Nutzfahrzeug 1 als Profile aus Stahl mit einem C-förmigen Querschnitt ausgebildet, wobei die Öffnung der Profile nach innen weist. Zudem sind die dargestellten und insoweit bevorzugten Plankenelemente 17 mit Stützelementen 18 verbunden, welche die Plankenelemente 17 gegenüber der Bodenstruktur 10, hier insbesondere entsprechende Querträger Q der Bodenstruktur, abstützen, um die Anfahrkräfte von den Plankenelementen 17 über die Stützelemente 18 an die Bodenstruktur 10 abzuleiten. Die Stützelemente 18 sind dabei in Form von sich wenigstens im Wesentlichen senkrecht von der Bodenstruktur 10 nach unten erstreckenden Streben vorgesehen, bei denen es sich um Hohlprofile aus Stahl handelt. Ferner erstrecken sich die Stützelemente 18 bei dem dargestellten und insoweit bevorzugten Nutzfahrzeug 1 wenigstens im Wesentlichen rechtwinklig zu den Plankenelementen 17 derselben Anfahrschutzvorrichtung 14. Im Übrigen ist es bevorzugt aber nicht zwingend, dass die Plankenelemente 17 der jeweiligen Anfahrschutzvorrichtungen 14 jeweils mittels zwei Stützelementen 18 an der Bodenstruktur 10, insbesondere an einem Außenrahmen 16 der Bodenstruktur 10, festgelegt sind. Bei alternativen Anfahrschutzvorrichtungen kann auch eine andere Anzahl an Plankenelementen vorgesehen sein, wobei in vielen Fällen ein oder drei Plankenelemente bevorzugt sein werden.

Die Stützelemente 18 sind fest mit der Bodenstruktur 10, vorliegend mit dem Außenrahmen 16 der Bodenstruktur 10, verbunden, wobei diese Verbindung jedoch teilweise gelöst werden kann. In der teilweise gelösten Stellung der Verbindung zwischen der Bodenstruktur 10 und den Stützelementen 18 können diese nach außen und oben geschwenkt werden, um so einen Zugang von außen unter die Bodenstruktur 10 zu gewährleisten. In der fest verbundenen Stellung ist das Stützelement 18 bei dem dargestellten und insoweit bevorzugten Nutzfahrzeug 1 über zwei Bolzen 19 mit der Bodenstruktur 10 verbunden, während einer dieser Bolzen 19 entfernt werden kann, um die Verbindung in die teilweise gelöste Stellung zu verstellen. In der teilweise gelösten Stellung kann das Stützelement 18 um den verbleibenden Bolzen 19 nach außen und oben geschwenkt werden. An der Vorderseite der dargestellten und insoweit bevorzugten Anfahrschutzvorrichtung 14 ist eine aerodynamische Leiteinheit L zum aerodynamischen Leiten des Fahrtwinds vorgesehen. Zudem sind an den hinteren Enden der Plankenelemente 17 aerodynamische Kappenelemente K vorgesehen, die einen ungünstigen Strömungsabriss an den offenen Enden der die Plankenelemente 17 bildenden Profile vermeiden sollen.

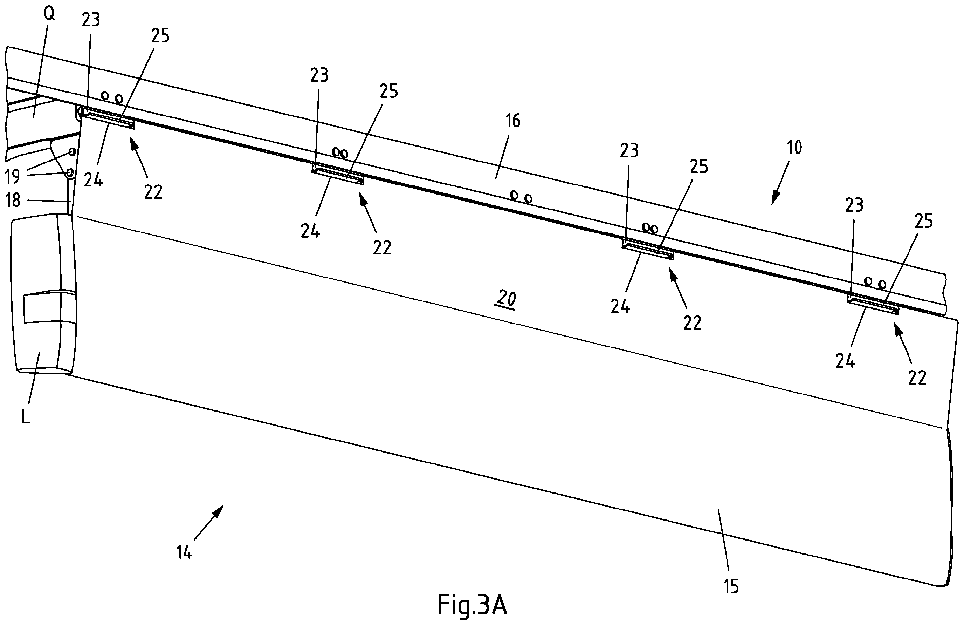

In der Fig. 3A-C ist die Anfahrschutzvorrichtung 14 der Fig. 2 zusammen mit dem zugehörigen Aerodynamikelement 15 dargestellt. Das Aerodynamikelement 15 ist im Wesentlichen durch eine flexible Materialbahn 20 gebildet. Die flexible Materialbahn 20 erstreckt sich bei der dargestellten und insoweit bevorzugten Anfahrschutzvorrichtung 14 von der vorderen aerodynamischen Leiteinheit L bis zum hinteren aerodynamischen Kappenelement K. Wenn dies in Einzelfall zweckmäßig erscheint, kann die flexible Materialbahn 20 aber auch entweder mit der Leiteinheit L und/oder dem Kappenelement K überlappend oder beabstandet von der Leiteinheit L und/oder dem Kappenelement K vorgesehen sein. Allerdings könnte grundsätzlich auch auf Leiteinheit L und/oder das Kappenelement K verzichtet werden.

Das Aerodynamikelement 15 oder konkreter die flexible Materialbahn 20 erstreckt sich bei dem dargestellten und insoweit bevorzugten Nutzfahrzeug 1 in der Längsrichtung des Nutzfahrzeugs 1 sowohl zwischen der Bodenstruktur 10 und dem oberen Plankenelement 17 der Anfahrschutzvorrichtung 14 als auch zwischen den beiden Plankenelementen 17 der Anfahrschutzvorrichtung 14. Das Aerodynamikelement 15 ist dabei einteilig ausgebildet und erstreckt sich von der Bodenstruktur 10, vorliegend konkret von dem Außenrahmen der Bodenstruktur 10, an der Außenseite der Plankenelemente 17 entlang bis zum unteren Rand des unteren Plankenelements 17. Dort ist das Aerodynamikelement 15 an der Innenseite des Plankenelements 17 in dieses eingehakt. Hierzu weist der untere Rand des Aerodynamikelements 15 wenigstens ein mit der flexiblen Materialbahn 20 verbundenes Hakenelement 21 auf, das in die nach innen weisende Öffnung des das Plankenelements 17 bildenden Profils eingehakt werden kann. Das Hakenelement 21 könnte dabei über ein elastisches Zwischenstück im Sinne eines Federmittels mit der flexiblen Materialbahn 20 verbunden sein. Bei dem dargestellten und insoweit bevorzugten Nutzfahrzeug 1 ist hierauf jedoch der Einfachheit halber verzichtet worden.

An dem oberen Rand des dargestellten und insoweit bevorzugten Aerodynamikelements 15 sind Ösenelemente 22 vorgesehen, die jeweils einen mit der flexiblen Materialbahn 20 verbundenen Stab 23 und eine dem Stab 23 zugeordnete Öffnung 24 im Aerodynamikelement 15, insbesondere in der flexiblen Materialbahn 20, aufweisen. Über die Ösenelemente 22 ist das Aerodynamikelement 15 in Aufnahmen 25 an der Bodenstruktur des Nutzfahrzeugs 1 eingehängt. Die Stäbe 23 der Ösenelemente 22 könnten dabei über ein elastisches Zwischenstück im Sinne eines Federmittels mit der flexiblen Materialbahn 20 verbunden sein. Bei dem dargestellten und insoweit bevorzugten Nutzfahrzeug 1 ist hierauf jedoch der Einfachheit halber verzichtet worden.

Im Bereich des oberen Plankenelements 17 ist an der flexiblen Materialbahn 20 ein elastisches Zwischenstück 26 im Sinne eines Federmittels vorgesehen. An der flexiblen Materialbahn 20 abgewandten Seite des elastischen Zwischenstücks 26 ist wenigstens ein Hakenelement 27 vorgesehen. Das an der Rückseite des oberen Plankenelements 17 in das C-Profil eingehängt ist. Das Einhaken des Aerodynamikelements 15 in ein Plankenelement 17 oder in beide Plankenelemente 17 ist jedoch nicht auf Plankenelemente 17 mit C-förmigen Querschnitten beschränkt. Ein Einhängen von Hakenelementen 21,27 ist auch bei Plankenelementen 17 mit anderen Profilen möglich. Durch das elastische Zwischenstück 26 wird das Aerodynamikelement 15 nicht nur bündig an die Plankenelemente 17 gezogen, sondern auch das Aerodynamikelement 15 um die Anfahrschutzvorrichtung 14 gespannt, so dass das Aerodynamikelement 15 bei der Fahrt des Nutzfahrzeugs 1 nicht im Fahrtwind flattert.

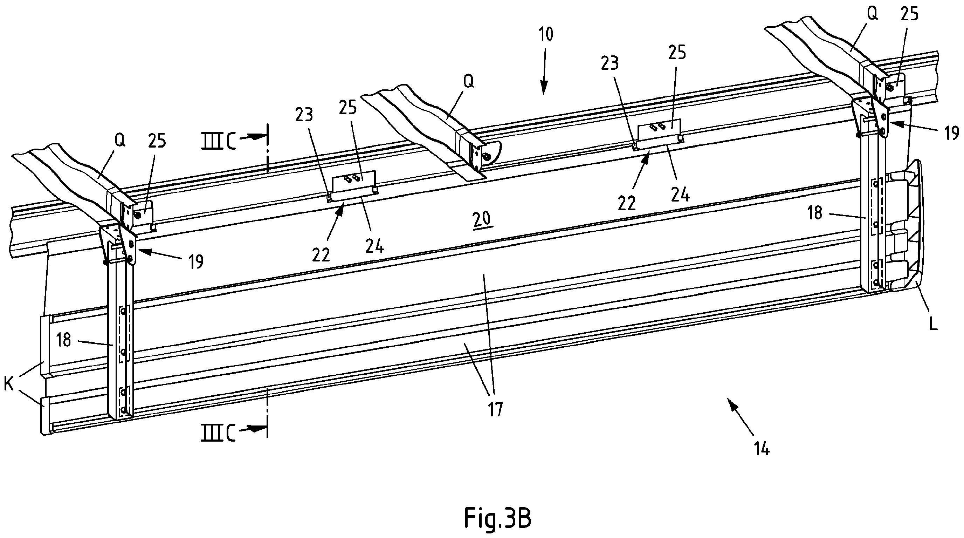

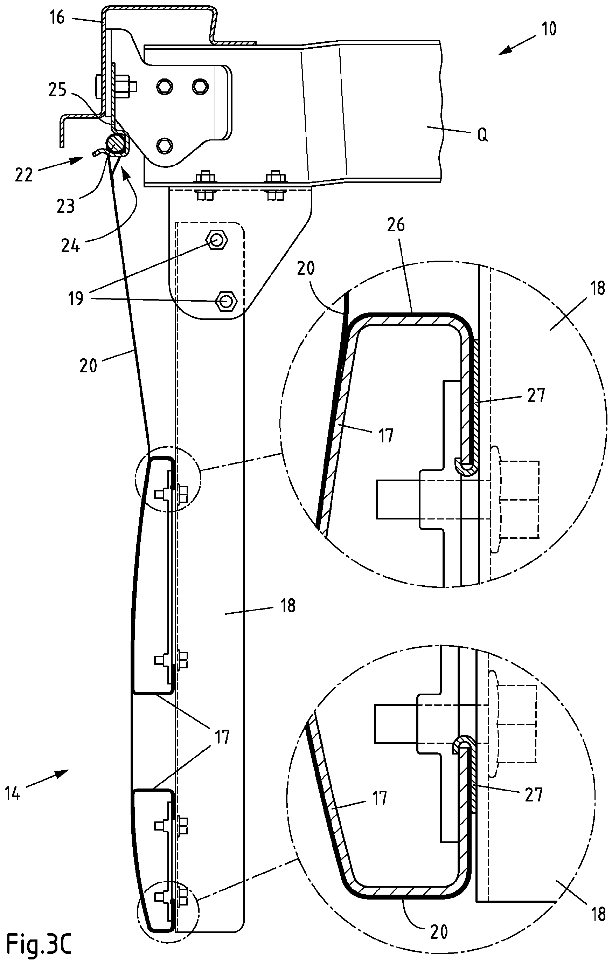

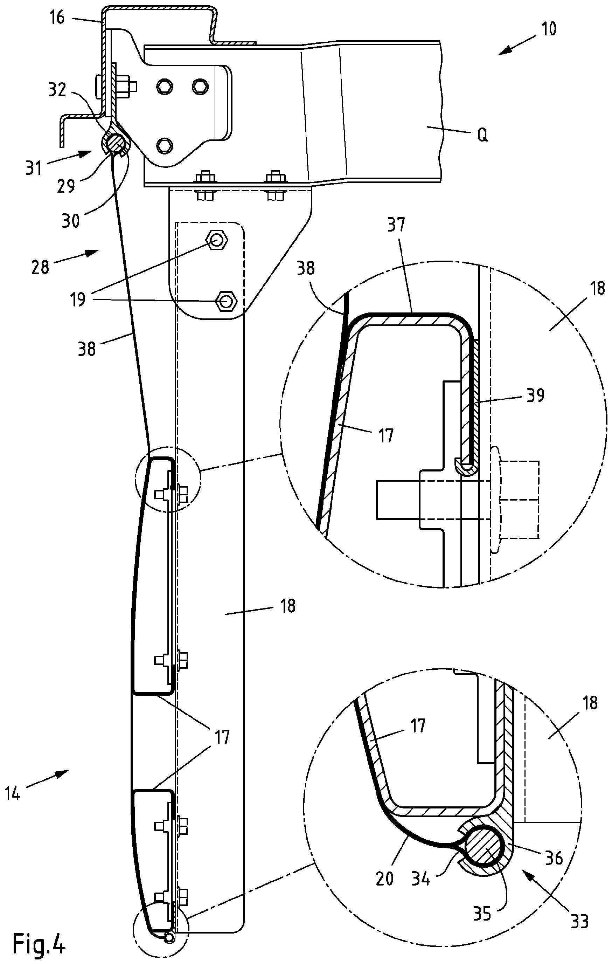

In der Fig. 4 ist ein Detail der Bodenstruktur 10 mit einem alternativen Aerodynamikelement 28 dargestellt. Die Anfahrschutzvorrichtung 14 ist dabei wenigstens ähnlich zu der in der Fig. 3 wiedergegebenen ausgebildet, weshalb hier auch gleiche Bezugszeichen verwendet werden. Diese Anfahrschutzvorrichtung 14 weist jedoch ein anderes Aerodynamikelement 28 auf. Das entsprechende Aerodynamikelement 28 weist am oberen Rand einen Saum 29 auf, in dem ein stabförmiges Kederelement 30 aufgenommen ist. Der so gebildete Keder 31 des oberen Rands des Aerodynamikelements 28 ist formschlüssig in einer Kederleiste 32 an dem Außenrahmen 16 der Bodenstruktur 10 eingezogen. Auch der untere Rand des Aerodynamikelements 28 weist einen Keder 33 auf, der durch ein stabförmiges, in einem Saum 34 des Aerodynamikelements 28 aufgenommenen Kederelements 35 gebildet wird. Der entsprechende Keder 33 ist in eine Kederleiste 36 an dem unteren Plankenelement 17 formschlüssig eingezogen. Abgespannt ist das Aerodynamikelement 28 wie das Aerodynamikelement der Fig. 3, indem wenigstens ein über ein elastisches Zwischenstück 37 mit der flexiblen Materialbahn 38 verbundenes Hakenelement 39 in die Rückseite des oberen Plankenelements 17 eingehängt ist.

### Bezugszeichenliste

- 1: Nutzfahrzeug
- 2: Aufbau
- 3: Dach
- 4: Stirnwand
- 5: Seitenwand
- 6: Rückwand
- 7: Flügeltüren
- 8: Laderaum
- 9: Ladeboden
- 10: Bodenstruktur
- 11: Chassis
- 12: Fahrwerk
- 13: Räderpaar
- 14: Anfahrschutzvorrichtung
- 15: Aerodynamikelement
- 16: Außenrahmen
- 17: Plankenelement
- 18: Stützelement
- 19: Bolzen
- 20: Materialbahn
- 21: Hakenelement
- 22: Ösenelement
- 23: Stab
- 24: Öffnung
- 25: Aufnahme
- 26: Zwischenstück
- 27: Hakenelement
- 28: Aerodynamikelement
- 29: Saum
- 30: Kederelement
- 31: Keder
- 32: Kederleiste
- 33: Keder
- 34: Saum
- 35: Kederelement
- 36: Kederleiste
- 37: Zwischenstück
- 38: Materialbahn
- 39: Hakenelement
- K: Kappenelemente
- L: Leiteinheit
- N: Nutzfahrzeug
- Q: Querträger

## Patentansprüche

1. Nutzfahrzeug, insbesondere Lastkraftwagen, Anhänger oder Sattelauflieger, mit einem wenigstens ein Räderpaar aufweisenden Fahrgestell und einer von dem Fahrgestell getragenen Bodenstruktur, wobei an wenigstens einer Längsseite des Nutzfahrzeugs in Fahrtrichtung des Nutzfahrzeugs vor und/oder hinter dem wenigstens einen Räderpaar wenigstens eine Anfahrschutzvorrichtung unterhalb der Bodenstruktur vorgesehen ist und wobei die Anfahrschutzvorrichtung wenigstens ein sich parallel zur Fahrzeuglängsrichtung erstreckendes Plankenelement zum Verhindern eines seitlichen Unterfahrens des Nutzfahrzeugs bereitstellt,
**dadurch gekennzeichnet, dass**
ein sich parallel zur Fahrzeuglängsrichtung erstreckendes, wenigstens eine flexible Materialbahn umfassendes Aerodynamikelement vorgesehen ist und dass die flexible Materialbahn sich wenigstens zwischen der Bodenstruktur und dem wenigstens einen Plankenelement und/oder wenigstens zwischen zwei übereinander angeordneter Plankenelemente erstreckt.

2. Nutzfahrzeug nach Anspruch 1,
**dadurch gekennzeichnet, dass**
sich die flexible Materialbahn des Aerodynamikelements oder das Aerodynamikelement, vorzugsweise wenigstens im Wesentlichen über die gesamte Längserstreckung des Plankenelement und/oder der Anfahrschutzvorrichtung, in Längsrichtung des Nutzfahrzeugs erstreckt.

3. Nutzfahrzeug nach Anspruch 1 oder 2,
**dadurch gekennzeichnet, dass**
das Aerodynamikelement, das wenigstens eine Plankenelement, das Aerodynamikelement und/oder die flexible Materialbahn einen seitlichen Abschluss des Nutzfahrzeugs bilden.

4. Nutzfahrzeug nach einem der Ansprüche 1 bis 3,
**dadurch gekennzeichnet, dass**
die wenigstens eine Anfahrschutzvorrichtung wenigstens ein an der Bodenstruktur montiertes Stützelement zum Abstützen des wenigstens einen Plankenelements gegenüber seitlich auf das wenigstens einen Plankenelement einwirkenden Anfahrkräften aufweist.

5. Nutzfahrzeug nach einem der Ansprüche 1 bis 4,
**dadurch gekennzeichnet, dass**
der obere Rand des Aerodynamikelements und/oder der flexiblen Materialbahn an der Bodenstruktur festgelegt ist und/oder dass der untere Rand des Aerodynamikelements und/oder der flexiblen Materialbahn an dem unteren Rand oder der nach innen weisenden Rückseite des, insbesondere unteren, Plankenelements festgelegt ist und/oder dass das Aerodynamikelement und/oder die flexible Materialbahn an der Außenseite des wenigstens einen Plankenelements herumgeführt ist.

6. Nutzfahrzeug nach einem der Ansprüche 1 bis 5,
**dadurch gekennzeichnet, dass**
das Aerodynamikelement und/oder die flexible Materialbahn an dem unteren Rand oder der nach innen weisenden Rückweite eines oberhalb des unteren Plankenelements vorgesehenen Plankenelements festgelegt ist und/oder dass das Aerodynamikelement und/oder die flexible Materialbahn an der Außenseite des wenigstens einen oberhalb des unteren Plankenelements vorgesehenen Plankenelements herumgeführt ist.

7. Nutzfahrzeug nach einem der Ansprüche 1 bis 6,
**dadurch gekennzeichnet, dass**
der obere Rand und/oder der untere Rand des Aerodynamikelements einen in einer Kederleiste der Bodenstruktur oder des wenigstens einen Plankenelements aufgenommenen Keder aufweist und dass, vorzugsweise, der Keder über wenigstens ein elastisches Federelement an der flexiblen Materialbahn angebunden ist.

8. Nutzfahrzeug nach einem der Ansprüche 1 bis 7,
**dadurch gekennzeichnet, dass**
der obere Rand und/oder der untere Rand des Aerodynamikelements wenigstens ein mit dem wenigstens einen Plankenelement verbundenes Hakenelement und/oder Ösenelement aufweist und dass, vorzugsweise, das wenigstens eine Hakenelement und/oder Ösenelement über wenigstens ein elastisches Federelement an der flexiblen Materialbahn angebunden ist.

9. Nutzfahrzeug nach einem der Ansprüche 1 bis 8,
**dadurch gekennzeichnet, dass**
das Aerodynamikelement und/oder die flexiblen Materialbahn über wenigstens einen in einer Kederleiste aufgenommenen Keder, über wenigstens ein Hakenelement und/oder über wenigstens ein Ösenelement mit einem oberhalb des unteren Plankenelements vorgesehenen Plankenelements verbunden ist und dass, vorzugsweise, die Kederleiste, das Hakenelement und/oder das Ösenelement über wenigstens ein elastisches Federelement an der flexiblen Materialbahn angebunden ist.

10. Nutzfahrzeug nach einem der Ansprüche 1 bis 9,
**dadurch gekennzeichnet, dass**
sich das wenigstens eine Plankenelement, insbesondere alle Plankenelemente, wenigstens im Wesentlichen parallel zur Bodenstruktur erstreckt und/oder dass das wenigstens eine Plankenelement durch wenigstens eine Stützelement in Form einer sich von der Bodenstruktur, insbesondere wenigstens im Wesentlichen senkreckt, nach unten erstreckenden Strebe zum Ableiten von Anfahrkräften gegenüber der Bodenstruktur abgestützt ist.

11. Nutzfahrzeug nach einem der Ansprüche 1 bis 10,
**dadurch gekennzeichnet, dass**
das wenigstens eine Plankenelement und/oder das wenigstens eine Stützelement als Hohlprofil und/oder nach innen offenes, U-förmiges oder C-förmiges Profil ausgebildet ist und/oder dass das wenigstens eine Plankenelement und/oder das wenigstens eine Stützelement aus Stahl, Aluminium oder einem faserverstärkten Kunststoff gebildet ist.

12. Nutzfahrzeug nach einem der Ansprüche 1 bis 11,
**dadurch gekennzeichnet, dass**
die Anfahrschutzvorrichtung zusammen mit dem Aerodynamikelement von einer Gebrauchsstellung in einer den Zugang einem Bereich unterhalb der Bodenstriktur freigebenden Freigabestellung nach außen und nach oben schwenkbar, insbesondere klappbar, ausgebildet ist und dass, vorzugsweise, das wenigstens eine Stützelement über eine teilweise lösbare, insbesondere schwenkbare und/oder klappbare, Verbindung mit der Bodenstruktur verbunden ist.

13. Nutzfahrzeug nach einem der Ansprüche 1 bis 12,
**dadurch gekennzeichnet, dass**
die wenigstens eine flexible Materialbahn durch ein Gewebe, eine Kunststofffolie, ein kunststoffbeschichtetes Gewebe, ein kunststoffbeschichtetes Gelege oder eine ein Gewebe oder eine Gelege aufweisende Kunststofffolie gebildet wird und dass, vorzugsweise, die wenigstens eine flexible Materialbahn durch ein Planenmaterial zur Verschließen eins Planenaufbaus eines Nutzfahrzeugs ausgebildet ist.

14. Nutzfahrzeug nach einem der Ansprüche 1 bis 13,
**dadurch gekennzeichnet, dass**
an beiden Längsseiten des Nutzfahrzeugs in Fahrtrichtung des Nutzfahrzeugs vor und/oder hinter dem wenigstens einen Räderpaar jeweils wenigstens eine Anfahrschutzvorrichtung unterhalb der Bodenstruktur vorgesehen ist, wobei die Anfahrschutzvorrichtungen an den gegenüberliegenden Längsseiten jeweils wenigstens ein sich parallel zur Fahrzeuglängsrichtung erstreckendes Plankenelement zum Verhindern eines seitlichen Unterfahrens des Nutzfahrzeugs bereitstellen, wobei an jeder der Anfahrschutzvorrichtungen an den gegenüberliegenden Längsseiten ein sich parallel zur Fahrzeuglängsrichtung erstreckendes, wenigstens eine flexible Materialbahn umfassendes Aerodynamikelement vorgesehen ist und wobei die flexible Materialbahnen sich jeweils wenigstens zwischen der Bodenstruktur und dem wenigstens einen Plankenelement und/oder wenigstens zwischen zwei übereinander angeordneter Plankenelemente erstrecken.

15. Nutzfahrzeug nach einem der Ansprüche 1 bis 14,
**dadurch gekennzeichnet, dass**
die Bodenstruktur einen Ladeboden, insbesondere eines Kofferaufbaus oder eines Plananaufbaus, oder eine Kippermulde trägt.
